# EUROPÄISCHE PATENTSCHRIFT

(11) **EP 1 007 833 B1**
(45) Veröffentlichungstag und Bekanntmachung des Hinweises auf die Patenterteilung: **10.12.2003**
(21) Anmeldenummer: 99927836.9
(22) Anmeldetag: 02.06.1999
(51) Int. Cl.: F02D 41/40, F02D 41/06, F02D 19/02, F02P 19/00

(54) **VERFAHREN ZUR ZÜNDUNG EINES MEHRZYLINDER-HUBKOLBENGASMOTORS DURCH EINBLASEN EINES ZÜNDGASES**
METHOD FOR IGNITING A MULTI-CYLINDER RECIPROCATING GAS ENGINE BY INJECTING AN IGNITION GAS
PROCEDE DE REALISATION DE L'ALLUMAGE DANS UN MOTEUR A GAZ A PISTONS ALTERNATIFS MULTICYLINDRE PAR INJECTION D'UN GAZ D'ALLUMAGE

(30) Priorität: 18.06.1998 DE 19827080; 27.11.1998 DE 19854776
(43) Veröffentlichungstag der Anmeldung: 14.06.2000
(73) Patentinhaber: FEV Motorentechnik GmbH, 52078 Aachen (DE)
(72) Erfinder: HUPPERICH, Patrick, D-53757 Sankt Augustin (DE); UMIERSKI, Markus, D-52222 Stolberg (DE)
(74) Vertreter: Langmaack, Jürgen, Dipl.-Ing.
(86) Internationale Anmeldenummer: EP9903806
(87) Internationale Veröffentlichungsnummer: WO99066186

(56) Entgegenhaltungen:
- DE-A- 4 419 429
- US-A- 5 146 881
- US-A- 5 315 973
- US-A- 5 771 857
- PATENT ABSTRACTS OF JAPAN vol. 097, no. 005, 30. Mai 1997 (1997-05-30) & JP 09 025823 A (MITSUBISHI HEAVY IND LTD), 28. Januar 1997 (1997-01-28)
- WILLI M L ET AL: "Design and development of a direct injected, glow plug ignition-assisted, natural gas engine" J ENG GAS TURBINES POWER TRANS ASME;JOURNAL OF ENGINEERING FOR GAS TURBINES AND POWER, TRANSACTIONS OF THE ASME OCT 1995 ASME, NEW YORK, NY, USA, Bd. 117, Nr. 4, Oktober 1995 (1995-10), Seiten 799-803, XP002114863

## Beschreibung

Hubkolben-Gasmotoren, die mit Brenngasen mit hohem Energiegehalt betrieben werden, können sowohl nach dem Otto-Verfahren als auch nach dem sogenannten Diesel-Gasverfahren betrieben werden. In beiden Fällen wird ein Gemisch aus Luft und Brenngas angesaugt und verdichtet. Die Zündung erfolgt beim Otto-Verfahren durch Funkenüberschlag zwischen den Elektroden einer Zündkerze. Beim Diesel-Gasverfahren erfolgt die Zündung über einen sogenannten Zündstrahl, d. h. in das verdichtete Brenngas-Luft-Gemisch wird zur Einleitung der Verbrennung eine abgemessene Menge eines selbstzündungsfähigen flüssigen Zündkraftstoffs, in der Regel Diesel-Kraftstoff, unter hohem Druck eingespritzt. Der eingespritzte Zündkraftstoff entzündet sich selbst und bildet hierbei eine Vielzahl räumlich verteilter Zündquellen. Die durch den eingespritzten Zündkraftstoff freigesetzte Energie ist erheblich größer als die Funkenenergie einer Zündkerze. Die Vorteile ergeben sich hierbei hinsichtlich der Wartungskosten und der Stillstandszeiten, da bei steigender Zündenergie die Zündkerzen hohe Verschleißraten und damit eine drastisch abnehmende Lebensdauer aufweisen.

Bei einem nach dem Otto-Verfahren arbeitenden Gasmotor wird der besondere Vorteil eines erheblich geringeren Ausstoßes an Schadstoff, insbesondere an Stickoxiden gegenüber Benzin- oder Dieselmotoren in vollem Umfang ausgenutzt. Bei einem nach dem Diesel-Gasverfahren arbeitenden Gasmotor wird jedoch die Schadstoffemission durch den zur Zündung eingespritzten Zündkraftstoff gegenüber dem nach dem Otto-Verfahren arbeitenden "reinen" Gasmotor vergrößert. Das hatte zur Folge, daß im Diesel-Gasverfahren bisher nur sehr große stationäre Gasmotoren mit einem Volumen von 20.000 cm³ und mehr je Zylinder betrieben werden konnten, da nur bei derart großen Motoren der zusätzliche, durch den Zündkraftstoff bewirkte Schadstoffaustrag im Verhältnis zum gesamten Schadstoffaustrag des Gasmotors gering gehalten werden konnte. Dies beruht darauf, daß der Einspritzvorgang von der Drehbewegung einer Nockenwelle und einer vorgegebenen Nockenkontur gesteuert wurde, so daß, wenn auch drehzahlabhängig, Einspritzgebinn und Einspritzende und damit bei vorgegebenem Zündkraftstoffvordruck auch die Einspritzmenge nicht beeinflußt ist.

Aus DE -A-44 19 429 ist ein Verfahren zum Betreiben eines selbstzündenden gemischverdichtenden Gasmotors bekannt, bei dem an Stelle eines flüssigen Zündkraftstoffes ein Zündgas verwendet wird. Zweckmäßigerweise wird als Zündgas das gleiche Brenngas verwendet, das auch zum Betrieb des Gasmotors in Form eines Brenngas-Luft-Gemisches eingesetzt wird. Bei dem vorbekannten Verfahren ist jedem, den Hauptbrennraum bildenden Zylinder eine kleine Vorkammer zugeordnet, in die das Zündgas unter einem Druck der über dem Verdichtungsdruck im Hauptbrennraum liegt. eingeblasen wird. Der Vorteil dieses Verfahrens besteht darin, daß nur noch eine Brennstoffart eingesetzt werden muß, so daß eine Reduzierung der Emissionswerte insbesondere bei den Stickoxiden erzielt wird. Der Nachteil dieses Verfahrens besteht in einer durch die Verwendung von Vorkammern bedingten aufwendigen Motorenkonstruktion.

Der Erfindung liegt die Aufgabe zugrunde, ein Zündverfahren für Gasmotoren zu schaffen, das sowohl den Bauaufwand als auch den Motorenbetrieb vereinfacht.

Diese Aufgabe wird gemäß der Erfindung gelöst durch ein Zündverfahren für einen Mehrzylinder-Hubkolben-Gasmotor, bei dem zur Einleitung eines Arbeitstaktes ein in dem jeweils zu befeuernden Zylinderraum enthaltenes, komprimiertes, im wesentlichen homogenes nichtselbstzündungsfähiges Brenngas-Luft-Gemisch gezündet wird durch direktes Einblasen einer kleinen Brenngasmenge als Zündgas auf eine heiße Oberfläche, wobei der Einblasbeginn vorgebbar in Abhängigkeit von der Kurbelwellenstellung über eine Motorsteuerung gesteuert wird. Bei diesem Verfahren wird zunächst das Brenngas-Luft-Gemisch im jeweiligen Zylinder verdichtet, das gegen Ende des Verdichtungshubes in homogener Form vorliegt, jedoch als mageres Gemisch die Selbstzündungsbedingungen aufgrund des Mischungsverhältnisses nicht erfüllt. Zur Zündung wird gegen Ende des Verdichtungshubes die kleine Brenngasmenge als Zündgas unter Druck direkt in den Brennraum eingeblasen. Zweckmäßigerweise wird als Zündgas das gleiche Brenngas verwendet, wie es auch im Brenngas-Luft-Gemisch enthalten ist, vorteilhaft im wesentlichen ohne Luftzumischung. Durch die gezielte Einblasung des Zündgases wird im Einblasbereich praktisch punktuell eine Gemischanreicherung bewirkt, durch die in einem eng begrenzten Bereich die Selbstzündungsbedingungen eingestellt werden.

Um nun den Zündort im Brennraum festzulegen und auch um den Zündverzug zu verkürzen, wird die Zündgasmenge über eine Zündhilfe in Form einer heißen Oberfläche eingeblasen, die eine Temperatur deutlich oberhalb der Brennraumoberflächentemperaturen aufweist. Diese heiße Oberfläche kann beispielsweise in Form eines in den Brennraum hineinragenden Glühkörpers vorgesehen werden, der mit einer Quelle zur Versorgung mit Heizenergie verbunden ist. Dies kann beispielsweise eine Stromquelle sein, durch die in der Startphase des Motors die erforderliche Oberflächentemperatur des Glühkörpers aufrechterhalten wird. Nach einer entsprechenden Betriebszeit weistjedoch der Glühkörper ein ausreichendes Temperaturniveau auf, so daß die Stromquelle abgeschaltet werden kann. Die heiße Oberfläche kann jedoch auch durch andere bauliche Gestaltungen im Zylinderraum, beispielsweise durch Vorsprünge oder dergl., gebildet werden.

Die Steuerung des Beginns der Brennstoffumsetzung erfolgt jeweils durch die Freigabe der einzublasenden Zündgasmenge, so daß eine Steuerbarkeit des Brennverfahrens analog zu dem Zündzeitpunkt einer Funkenzündung erreicht wird.

Das erfindungsgemäße Zündverfahren läßt sich insbesonders bei der Verwendung methanhaltiger Gase mit niedrigem Energiegehalt, sogenannten Schwachgasen vorteilhaft einsetzen, da über die gezielte und örtlich fixierte Selbstzündung eine hohe zündenergie zur Verfügung steht und damit eine sichere Entflammung auch bei energiearmen Gasen, aber auch bei mageren Brenngas-Luft-Gemischen gewährleistet ist. Derartige Schwachgase stehen beispielsweise.über Koksgas, Gichtgas oder auch Konvertergas im Bereich der stahlerzeugenden Industrie aber auch als Pyrolysegas aus der Müllverbrennung zur Verfügung.

Während es grundsätzlich möglich ist, aus einer zentralen unter Hochdruck stehenden Brenngasquelle nach Art eines Common-Rail-Einspritzsystems, wie es von normalen Dieselmotoren bekannt ist, das Zündgas mit entsprechend hohem Druck direkt in den jeweils zu befeuernden Zylinderraum einzublasen, ist in einer vorteilhaften Ausgestaltung der Erfindung vorgesehen, das zuzumessende Zündgas aus einem jeweils einem Zylinder zugeordneten Zündgasspeicher über ein steuerbares Zündventil zu entnehmen, wobei der Zündgasspeicher einerseits mit einer Brenngasversorgung und andererseits mit einem Zylinderraum in Verbindung steht und der zündgasspeicher über eine Ventilanordnung durch Arbeitsgase aus dem Zylinderraum mit dem maximalen Brennraumdruck beaufschlagbar ist. Diese Anordnung hat den Vorteil, daß ein verhältnismäßig kleinvolumiger Zündgasspeicher mit der ohnehin bei den üblicherweise aufgeladenen Gasmotoren zur Verfügung stehenden Druckerzeugung der Brenngasversorgung bei einem Druck von etwa 4 bis 8 Bar aufgeladen werden kann. Dieser Druck reicht nicht aus, um die Zündgasmenge gegen den Kompressionsdruck in den betreffenden Zylinderraum einzublasen. Sobald der Zündgasspeicher mit Züngas gefüllt ist, wird der Zündgasspeicher mit einem gerade befeuerten Zylinder verbunden, so daß der Zündgasinhalt im Zündgasspeicher durch die Zufuhr einer geringen Arbeitsgasmenge aus dem befeuderten Zylinderraum mit dem maximalen Druck des Arbeitstaktes komprimiert wird. Dieser Arbeitsdruck liegt mit Sicherheit über dem Kompressionsdruck des über den Zündgasspeicher zu zündenden Zylinders, so daß zum Zündzeitpunkt für diesen Zylinder das Zündgas mit hohem Druck zur Verfügung steht und durch einfaches Öffnen eines Zündventils in den betreffenden Zylinderraum eingeblasen werden kann. Hält man dieses Ventil bis zum Ladungswechsel des betreffenden Zylinders geöffnet, dann wird im Zündgasspeicher der Druck so weit abgebaut, daß nach dem Schließen des Zündventils der Druck der zentralen Brenngasversorgung ausreicht, um den Speicher wieder entsprechend zu füllen.

Die Zündwilligkeit des auf diese Weise mit einer geringen Menge an heißen Arbeitsgasen aus dem druckerzeugenden Zylinderraum vermischten Zündgase wird nicht beeinträchtigt. Die Zumischung an heißen Arbeitsgasen bietet den Vorteil, daß zusammen mit der Druckerhöhung im Zündgasspeicher der Zündgasmenge zusätzlich Wärme zugeführt wird, die die Abkühlung bei der Entspannung der Zündgasmenge während der Einblasung in den Zylinderraum kompensiert.

Während bei der vorstehend beschriebenen Druckerzeugung für das Zündgas entsprechend der gegebenen Zündfolge jeweils ein "benachbarter" Zylinderraum angezapft werden muß, um den Druck des Zündgases im Zündgasspeicher zu erhöhen, ist in einer vorteilhaften weiteren Ausgestaltung der Erfindung vorgesehen, daß dem Zündgasspeicher ein zusätzlicher Druckspeicher zugeordnet ist, der einerseits mit dem maximalen Brennraumdruck aus dem dem Zündgasspeicher zugeordneten Zylinderraum beaufschlagt wird und durch dessen Gasinhalt andererseits der Zündgasspeicher mit Druck beaufschlagbar ist. Diese Verfahrensweise bietet den Vorteil, daß der maximale Arbeitsdruck des voraufgegangenen Arbeitszyklus des jeweils zu befeudernden Zylinders zur Verdichtung der Zündgasmenge zur Verfügung steht. Der weitere Vorteil besteht darin, daß der Zündgasspeicher und der Druckspeicher einschließlich der zugeordneten Ventile zu einer Zündgaszumeßeinrichtung als Baueinheitzusammengefaßt werden kann, die wie eine Einspritzdüse oder eine Zündkerze in den Zylinderkopf eingesetzt werden kann. Der weitere Vorteil dieser Anordnung besteht darin, daß ein Teil der aus mehreren Ventilen gebildeten Ventilanordnung durch Rückschlagventile gebildet werden kann, daß dementsprechend sich der Aufwand an Ventilen, die über die Motorsteuerung anzusteuern sind, reduziert.

In weiterer Ausgestaltung der Erfindung ist vorgesehen, daß die Oberfläche des Glühkörpers zumindest teilweise mit einem für das Brenngas katalytisch wirkenden Material versehen ist. Durch diese Maßnahme kann noch eine weitere Herabsetzung der Zündtemperatur bewirkt werden, wenn durch eine entsprechende katalytisch bewirkte Umsetzung des das Zündgas bildenden Gases die Zündwilligkeit der im Zündbereich befindlichen angereicherten Luft-Brenngasmischung noch verbessert wird.

In weiterer Ausgestaltung der Erfindung ist vorgesehen, daß die Energiezufuhr zum Glühkörper in Abhängigkeit von vorgebbaren Temperaturen erfolgt. Mit dieser Maßnahme kann für die unterschiedlichsten Last- und Drehzahlbereiche sichergestellt werden, daß am Glühkörper ein Temperaturniveau vorhanden ist, das zur Zündung des Zündgases ausreicht. Die Art und Weise der Temperaturvorgabe kann hierbei vom Einsatz der betreffenden Brennkraftmaschine abhängig gemacht werden. So kann es beispielsweise für stationäre Motoren, die im wesentlichen unter gleicher Last im Dauerbetrieb gefahren werden ausreichen, die Energiezufuhr zum Glühkörper mit einer Laufruheregelung zu koppeln, also nur indirekt die Temperatur des Glühkörpers zu erfassen. Sobald über die Laufruheregelung ein ansteigen der Laufunruhe erfaßt wird, kann neben anderen Maßnahmen im Hinblick auf die Zusammensetzung des dem Motor zuzuführenden Brenngas-Luft-Gemisches gleichzeitig auch die Energiezufuhr zum Glühkörper erhöht werden, so daß eine zuverlässige Zündung erreicht wird. Es ist auch möglich, an einer ausgewählten Stelle des Brennraumes die Oberflächentemperatur zu messen und bei einer Unterschreitung eines vorgebbaren Soll-Wertes für diese Brennraumoberflächentemperatur die dem Glühkörper vorzugsweise in Form von elektrischer Energie zuzuführende Heizenergie überhaupt zuzuführen oder um Falle einer laufenden Zufuhr von Heizenergie entsprechend zu erhöhen. Insbesondere bei Kolbenbrennkraftmaschinen, die mit wechselnder Last betrieben werden, wie beispielsweise Kolbenbrennkraftmaschinen in Fahrzeugen, ist es zweckmäßig, über ein in der Motorsteuerung abgelegtes Kennfeld einen oder eine Schar von Soll-Werten für die dem Glühkörper zuzuführende Heizenergie vorzugeben. Damit ist es möglich, die bei den verschiedenen Lastfällen unterschiedlichen Lambda-Werte, den Einfluß der Drehzahl und den jeweiligen Lastwunsch zu berücksichtigen. Hierbei ist es ebenso wie bei den vorbeschriebenen Maßnahmen zur Regelung und/oder Steuerung zweckmäßig, wenn die Ist-Temperatur des Glühkörpers erfaßt wird. Dies kann beispielsweise durch die Heizwendelwiderstandsänderung erfolgen.

Die Erfindung wird anhand schematischer Zeichnungen näher erläutert. Es zeigen:
- Fig. 1: einen Zylinder eines Mehrzylinder-Hubkolben-Gasmotors mit seiner Gasversorgung,
- Fig. 2: eine Anordnung von Zündgaszumeßeinrichtung mit integrierter Druckerzeugung,
- Fig. 3: eine Zündgaszumeßeinrichtung als geschlossene Baueinheit.

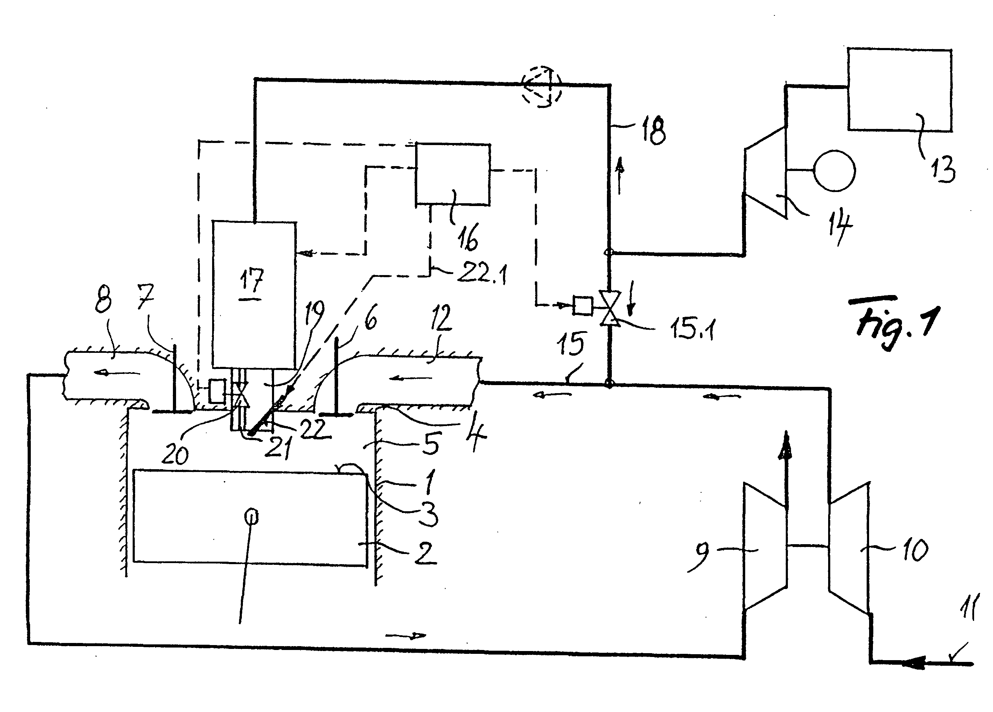

In Fig. 1 wird das Verfahren anhand eines Zylinders 1 eines Mehrzylinder-Hubkolben-Gasmotors näher erläutert. Der Brennraum 5 wird durch den Kolbenboden 2 des im oberen Totpunkt befindlichen Kolbens 3 einerseits und durch den Zylinderkopf 4 definiert. Der Zylinderkopf 4 kann hierbei in üblicher Bauart konzipiert sein. Der Zylinderkopf 4 ist mit einem Gaseinlaßventil 6 und einem Gasauslaßventil 7 versehen, die in üblicher Weise mechanisch und nockenwellensynchron oder über voll variable Ventilantriebe mittels einer Motorsteuerung entsprechend den Lastvorgaben angesteuert werden. Der dem Gasauslaßventil 7 zugeordnete Gasauslaßkanal 8 ist zusammen mit den hier nicht näher dargestellten Gasauslaßkanälen der übrigen Zylinder über eine Abgasturbine 9 geführt, die einen Turbolader 10 antreibt. Durch den Turbolader 10 wird über eine Zuleitung 11 Luft angesaugt und unter entsprechender Druckerhöhung über die Einlaßkanäle 12 der einzelnen Zylinder im Brennraum zugeführt.

Zur Erzeugung des für den Betrieb benötigten Brenngas-Luft-Gemisches wird aus einer Brenngasquelle 13 über einen Drukkerzeuger, beispielsweise einen motorbetriebenen Lader 14 das Brenngas mit einem Druck von beispielsweise 4 bis 8 Bar übereine gemeinsame Zuleitung 15 zu allen Lufteinlaßkanälen 12 oder aber in die den einzelnen Zylindern unmittelbar zugeordneten Bereichen der Gaseinlaßkanäle 12 über ein oder mehrere Ventile 15.1 eingeführt, die über eine Motorsteuerung 16 angesteuert werden.

Am Zylinderkopf 4 ist eine Zündgaszumeßeinrichtung 17 angeordnet, die vom Lader 14 über eine Zuleitung 18 ebenfalls mit Brenngas unter dem gegebenen Druck versorgt wird. Die Zündgaszumeßeinrichtung 17 ist mit einer hier nicht näher dargestellten Ventilanordnung versehen, die über eine Motorsteuerung 16 ansteuerbar ist, so daß entsprechend dem Arbeitstakt über die Zündgaszumeßeinrichtung 17 jeweils kurz vor dem oberen Totpunkt eine Zündgasmenge in das im Brennraum 5 enthaltene komprimierte homogene Brenngas-Luft-Gemisch eingeblasen wird.

Der Druck für das einzublasende Zündgas muß über dem Kompressionsdruck liegen, so daß an der Zündgaszumeßeinrichtung 17 das einzublasende Zündgas mit einem entsprechend hohen Druck zur Verfügung stehen muß. Grundsätzlich ist es möglich, in der Zuleitung 18 zu den einzelnen Zündgaszumeßeinrichtungen 17 einen zusätzlichen Verdichter vorzusehen, durch den das Brenngas auf den erforderlichen Druck von etwa 180 bis 250. Bar zu verdichten. Dies erfordert jedoch einen entsprechend hohen Bau- und Energieaufwand, so daß in der Zuleitung 18 dieser zusätzliche Verdichter nur angedeutet ist.

Die Zündgaszumeßeinrichtung 17 ist nach Art einer Zündkerze in den Zylinderkopf 4 eingesetzt und weist einen Zapfen 19 auf, in dem ein mit einem über die Motorsteuerung ansteuerbaren Zündventil 20 versehener Einblaskanal 21 vorgesehen ist.

Im Austrittsbereich des Einblaskanals 21 der Gaszumeßeinrichtung 17 ist als heiße Oberfläche ein Glühkörper 22, beispielsweise in Form eines elektrisch beheizbaren Glühstiftes angeordnet, auf den der Zündgasstrahl auftrifft. Eine Beheizung dieses Glühstiftes 22 ist jedoch nur so lange erforderlich, bis nach erfolgtem Start die Oberfläche des Glühstiftes so heiß ist, daß sie auch bei den nachfolgenden Ladungswechseln nicht abkühlt und eine solche Temperatur aufweist, daß infolge der örtlich eng begrenzten Absenkung der Zündtemperatur beim Einblasen des Zündgases die eingeblasene Zündgasmenge definiert entzündet wird und das komprimierte, in der Regel magere Brenngas-Luft-Gemisch im Brennraum 5 zündet. Von Bedeutung ist, daß das Zündgas direkt in den Brenneraum eingeblasen wird, das Zündverfahren also bei üblichen Motorkonstruktionen eingesetzt werden kann. Abgeteilte Zündräume, Vorkammern oder dergl. sind nicht notwendig, können aber auch vorgesehen werden.

Bei dem hier dargestellten schematischen Ausführungsbeispiel ist der Glühstift 22, wie über die Verbindungsleitung 22.1 angedeutet, mit der Motorsteuerung 16 verbunden. Die Verbindungsleitung 22.1 stellt zum einen eine elektrische Versorgungsleitung dar, mit der dem Glühstift elektrische Energie zum Aufheizen zugeführt wird. Sie kann je nach Ausgestaltung der Ansteuerung bzw. Regelung auch eine Signalleitung beinhalten, mit der das für die Zündung wichtige Temperaturniveau des Glühstiftes 22 erfaßt und in der Motorsteuerung 16 verarbeitet wird. Beim Starten des Gasmotors wird über die Motorsteuerung der Glühstift 22 zunächst aufgeheizt, so daß hier eine ausreichend hohe Temperatur vorliegt und somit ein zuverlässiges Zünden des einzublasenden Zündgases gewährleistet ist. Die Energiezufuhr ist dann so lange und in dem Maße aufrecht zu erhalten, bis die Temperaturbedingungen im Brennraum eine einwandfreie Zündung des Zündstrahles gewährleisten. So kann beispielsweise die Temperatur des Glühstiftes 22 von der Motorsteuerung laufend überwacht werden, so daß bei einem Überschreiten eines vorgegebenen Temperatur-Soll-Wertes die Energiezufuhr zurückgenommen oder vollständig abgeschaltet wird. Bei einem Unterschreiten eines vorgegebenen Soll-Wertes oder auch bei einer sich abzeichnenden Tendenz eines Temperaturabfalls in die Nähe des vorgegebenen Soll-Wertes kann dann über die Motorsteuerung wieder Heizenergie zugeführt werden. In der Regel ist eine Temperatur von mindestens 600°C aufrechtzuerhalten.

Die Motorsteuerung 16 kann hierbei auch Kennfelder für die einzuhaltende Mindesttemperatur des Glühstiftes aufweisen, die den Lastwunsch, die Drehzahl aber auch den Lambda-Wert des dem Gasmotor zuzuführenden Brenngas-Luft-Gemisches berücksichtigen.

Die Ausrichtung des strahlförmig aus der Gaszumeßeinrichtung 17 austretenden Zündgases kann in bezug auf die Gasbewegung im Brennraum vorgenommen werden. In Fig. 1 ist zur Vereinfachung der Zeichnung eine senkrecht gegen den Kolbenboden gerichtete Einblasung dargestellt. Es kann jedoch zweckmäßig sein, die Einblasrichtung geneigt gegen das Einlaßventil 6 auszurichten. Der Gasmotor kann jeweils auch mehrere Einlaßventile und/oder Auslaßventile aufweisen.

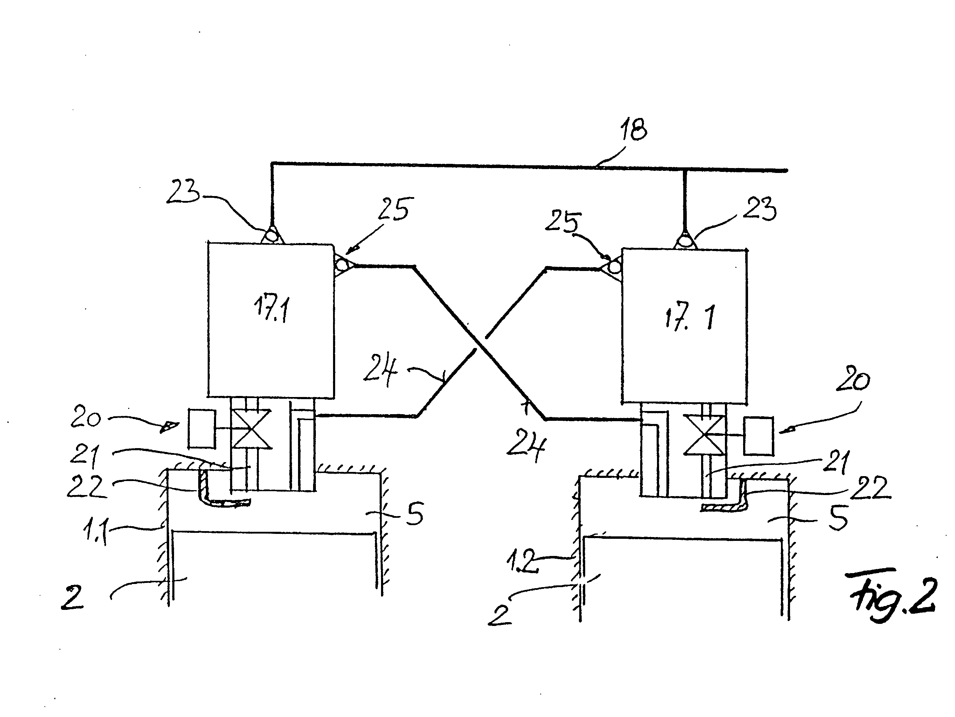

In Fig. 2 ist eine Ausführungsform für die Zündgaszumeßeinrichtung 17 im Prinzip dargestellt, die so ausgestaltet ist, daß über den Gasmotor selbst die Verdichtung der Zündgase bewirkt werden kann. Es sind zwei in der Zündfolge einander zugeordnete Zylinder 1.1 und 1.2 dargestellt, die jeweils mit einer Zündgaszumeßeinrichtung 17 versehen sind. Hierbei besteht jede Zündgaszumeßeinrichtung 17 im wesentlichen aus einem Zündgasspeicher 17.1, der über ein Ventil 23, beispielsweise ein Rückschlagventil, an die Brenngaszuleitung 18 angeschlossen ist.

Jeder Zündgasspeicher 17.1 steht ferner über eine Verbindungsleitung 24 jeweils mit dem Brennraum 5 des anderen Zylinders in Verbindung, wobei in der Verbindungsleitung 24 ein Ventil 25 angeordnet ist, beispielsweise ein sich in den Zündgasspeicher 17.1 öffnendes Rückschlagventil. Dieses Rückschlagventil 25 ist so eingestellt, daß es dann öffnet, wenn in dem betreffenden Zylinder, beispielsweise dem Zylinder 1.2, der Arbeitstakt abläuft, so daß unter Arbeitsdruck, als dem Maximaldruck, eine geringe Arbeitsgasmenge aus dem befeuerten Zylinder in den Zündgasspeicher 17.1 des anderen Zylinders, beispielsweise des Zylinders 1.1 übergeleitet wird und so die in diesem Speicher enthaltene Zündgasmenge auf den aus dem anderen Zylinder abgegriffenen Maximaldruck komprimiert wird. Sobald im Zylinder 1.1 der Zündvorgang eingeleitet werden soll, wird über eine entsprechende Ansteuerung des Zündgasventils 20 der Zündgaskanal 21 geöffnet, so daß gegen den niedrigen Kompressionsdruck im Zylinder 1.1 eine entsprechende Zündgasmenge in den Brennraum eintreten und hier das vorhandene homogene komprimierte Brenngas-Luft-Gemisch bei Kontakt des Zündgases mit der heißen Oberfläche des Glühstiftes 22 gezündet werden kann. Das Zündgasventil 20 bleibt hierbei geöffnet, bis der Kolben 3 des Zylinders 1.1 zum Ladungswechsel den unteren Totpunktbereich durchläuft. Anschließend wird das Zündgasventil 20 geschlossen. Hierdurch ist der Druck im Zündgasspeicher 17.1 so weit abgebaut, daß über die Zuleitung 18 unter Öffnung des Rückschlagventils 23 wieder die gewünschte Zündgasmenge in den Zündgasspeicher 17.1 eintreten kann.

Beim Arbeitstakt im Zylinder 1.1 wird dann entsprechend über eine Verbindungsleitung 24 das Zündgas im Zündgasspeicher des Zylinders 1.2 verdichtet, so daß auch hier für den nächsten Arbeitstakt die Zündgasmenge wieder mit dem erforderlichen hohen Druck zur Verfügung steht.

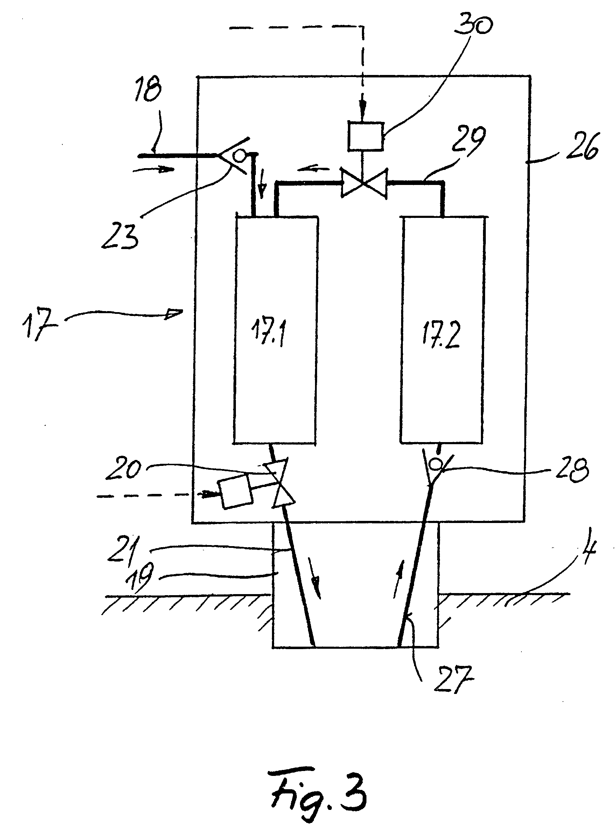

In Fig. 3 ist schematisch eine besondere Ausführungsform für eine Zündgaszumeßeinrichtung 17 dargestellt. Diese besteht im wesentlichen aus einem mit dem Zapfen 19 verbundenen Gehäuse 26, in dem einerseits ein Zündgasspeicher 17.1 und andererseits ein Druckspeicher 17.2 angeordnet ist. Der Zündgasspeicher 17.1 steht, wie anhand von Fig. 1 und Fig. 2 beschrieben, über eine Zuleitung 18 mit der Brenngasversorgung 13 in Verbindung, wobei durch ein Ventil 23, beispielsweise in Form eines Rückschlagventils, dafür Sorge getragen ist, daß bei einer Druckerhöhung im Zündgasspeicher 17.1 kein Zündgas abfließen kann. Über ein von der Motorsteuerung 16 ansteuerbares Zündventil 20 kann der Zündgasspeicher 17.1 geöffnet werden, so daß das Zündgas über den Einblaskanal 21 in den Brennraum des betreffenden Zylinders gelangen kann.

Im Zapfen 19 ist ferner ein Druckkanal 27 angeordnet, der mit dem Druckspeicher 17.2 in Verbindung steht und in dem ein Ventil 28, beispielsweise ein Rückschlagventil, angeordnet ist, das nur bei einem Überdruck im Brennraum des betreffenden Zylinders öffnet.

Der Druckspeicher 17.2 ist mit dem Zündgasspeicher 17.1 durch eine Verbindungsleitung 29 verbunden, in der ein ebenfalls von der Motorsteuerung 16 ansteuerbares Ventil 30 angeordnet ist.

Bei geöffnetem Zündventil 20 und geschlossenem Ventil 30 kann in den Zündgasspeicher 17.1 über die Zuleitung 18 Zündgas einströmen, wenn sich der Kolben während der Ladungswechselphase im Anschluß an einen Arbeitstakt im unteren Totpunkt befindet. Mit Beginn der Ausschubphase wird das Zündventil 20 über die Motorsteuerung geschlossen.

Da im voraufgegangenen Arbeitstakt beim Zünden des Brenngas-Luft-Gemisches im Brennraum ein Gasdruck herrscht, der deutlich über dem Kompressionsdruck liegt, wird über den Kanal 27 unter Öffnung des Rückschlagventils 28 in den Druckspeicher 17.2 eine entsprechend geringe Menge Arbeitsgas eingepreßt, dessen Druckniveau in etwa dem Maximaldruck entspricht. Dieses Arbeitsgas setzt sich zusammen aus noch nicht verbrannten Anteilen des Brenngas-Luft-Gemisches der Brennraumfüllung sowie einem entsprechenden Anteil an verbrannten Abgasen.

Soll nun für den nächsten Arbeitstakt des betreffenden Zylinders Zündgas gegen den Kompressionsdruck in den Brennraum eingepreßt werden, dann wird gleichzeitig, besser noch mit einem geringen Zeitlauf vor dem Öffnen des Zündventils 20, das Ventil 30 geöffnet, so daß das unter höherem Druck im Druckspeicher 17.2 stehende Arbeitsgas in den Zündgasspeicher überströmen kann und das Druckniveau im Zündgasspeicher 17.1 entsprechend erhöhen kann, so daß das Zündgas durch den Kanal 21 gegen den Kompressionsdruck in den Brennraum ausgepreßt wird. Zweckmäßig ist es hierbei, wenn der Druckspeicher 17.2 ein etwas größeres Volumen aufweist als der Zündgasspeicher 17.1.

In Abwandlung der anhand von Fig. 1 beschriebenen Betriebsweise ist es auch möglich, das für den Betrieb erforderliche homogene Brenngas-Luft-Gemisch in der Weise zu erzeugen, daß im Ansaugtakt über die Gaseinlaßkanäle 12 nur Luft angesaugt wird und daß in den Ansaugtakt hinein über die Gaszumeßeinrichtung 17 das unter einem entsprechenden Vordruck vorliegende Brenngas in den Zylinderraum 5 in einer der Lastanforderung entsprechend bemessenen Brenngasmenge eingeblasen wird. Das in Fig. 1 dargestellte Ventil 15.1 entfällt, so daß die gesamte Brenngasversorgung des Zylinders über die Zuleitung 18 und die Brenngaszumeßeinrichtung 17 erfolgt, wobei die Bemessung dieser Brenngasmenge über eine entsprechende Ansteuerung des Zündventils 20 durch die Motorsteuerung 16 erfolgt. Da die Einblasung während des Ansaugtaktes, also bei geringem Druck erfolgt, ist eine Selbstentzündung des Brenngases trotz des Vorhandenseins der heißen Oberfläche des Glühkörpers 22 ausgeschlossen.

## Patentansprüche

1. Zündverfahren für einen Mehrzylinder-Hubkolbengasmotor, bei dem zur Einleitung eines Arbeitstaktes ein in dem jeweils zu befeuernden Zylinderraum enthaltenes, komprimiertes, im wesentlichen homogenes nichtselbstzündungsfähiges Brenngas-Luft-Gemisch gezündet wird durch direktes Einblasen einer kleinen Brenngasmenge als Zündgas auf eine heiße Oberfläche, wobei der Einblasbeginn vorgebbar in Abhängigkeit von der Kurbelwellenstellung über eine Motorsteuerung gesteuert wird.

2. Verfahren nach Anspruch 1, **dadurch gekennzeichnet, daß** das zuzumessende Zündgas aus einem jeweils einem Zylinder zugeordneten Zündgasspeicher über ein steuerbares Zündventil entnommen wird, das einerseits mit einer Brenngasversorgung und andererseits mit dem Zylinderraum in Verbindung steht, wobei der Zündgasspeicher über eine Ventilanordnung durch Arbeitsgase aus dem Zylinderraum mit dem maximalen Brennraumdruck beaufschlagt ist.

3. Verfahren nach Anspruch 1 oder 2, **dadurch gekennzeichnet, daß** dem Zündgasspeicher ein zusätzlicher Druckspeicher zugeordnet ist, der einerseits mit dem maximalen Brennraumdruck aus dem dem Zündgasspeicher zugeordneten Zylinderraum beaufschlagt wird und durch dessen Gasinhalt andererseits der Zündgasspeicher mit Druck beaufschlagbar ist.

4. Verfahren nach einem der Ansprüche 1 bis 3, **dadurch gekennzeichnet, daß** die heiße Oberfläche durch einen im Einblasbereich angeordneten Glühkörper gebildet wird, der mit einer Quelle zur Versorgung mit Heizenergie verbindbar ist.

5. Verfahren nach einem der Ansprüche 1 bis 4, **dadurch gekennzeichnet, daß** die Oberfläche des Glühkörpers zumindest teilweise mit einem für das Brenngas katalytisch wirkenden Material versehen ist.

6. Verfahren nach einem der Ansprüche 1 bis 5, **dadurch gekennzeichnet, daß** zur Erzeugung des homogenen Brenngas-Luft-Gemisches eines entsprechend der Lastanforderungen bemessene Brenngasmenge im Ansaugtakt in den Zylinderraum eingeblasen wird.

7. Verfahren nach einem der Ansprüche 4 bis 6, **dadurch gekennzeichnet, daß** die Energiezufuhr zum Glühkörper in Abhängigkeit von vorgebbaren Temperaturen erfolgt.

## Claims

1. A method for igniting a multi-cylinder reciprocating gas engine, in which to initiate an operating cycle a compressed, substantially homogenous, non-self-igniting combustion-gas/air mixture contained in the respective cylinder chamber which is to be fired is ignited by directly injecting a small quantity of combustion gas as ignition gas on to a hot surface, the start of injection being presettably controlled dependent on the position of the crankshaft by an engine control means.

2. A method according to Claim 1, **characterised in that** the ignition gas to be injected is taken from an ignition-gas reservoir associated with one cylinder in each case via a controllable ignition valve which communicates firstly with a combustion-gas supply means and secondly with the cylinder chamber, the ignition-gas reservoir being acted upon by the maximum combustion-chamber pressure by means of a valve arrangement by working gases from the cylinder chamber.

3. A method according to Claim 1 or 2, **characterised in that** an additional pressure reservoir is associated with the ignition-gas reservoir, which pressure reservoir on one hand is acted upon by the maximum combustion-chamber pressure from the cylinder chamber associated with the ignition-gas reservoir and on the other hand the ignition-gas reservoir can be acted upon by pressure due to the gas content thereof.

4. A method according to one of Claims 1 to 3, **characterised in that** the hot surface is formed by a glow plug arranged in the injection region which can be connected to a source for supplying heating energy.

5. A method according to one of Claims 1 to 4, **characterised in that** the surface of the glow plug is provided at least in part with a material which acts as a catalyst for the combustion gas.

6. A method according to one of Claims 1 to 5, **characterised in that** a quantity of combustion gas calculated to correspond to the load requirements is injected into the cylinder chamber during the induction stroke to generate the homogenous combustion-gas/air mixture.

7. A method according to one of Claims 4 to 6, **characterised in that** the supply of energy to the glow plug is effected dependent on presettable temperatures.

## Revendications

1. Procédé d'allumage pour un moteur à gaz à pistons alternatifs multicylindre, dans lequel, pour introduire un temps moteur, un mélange air/gaz combustible comprimé, homogène en général, non auto-inflammable et contenu dans la chambre de cylindre respectif devant être allumé est allumé par injection directe d'une faible quantité de gaz combustibles servant de gaz d'allumage sur une surface chaude, le début de l'injection étant commandé via une commande moteur de façon prédéfinie en fonction de la position du vilebrequin.

2. Procédé selon la revendication 1, **caractérisé en ce que** le gaz d'allumage à mesurer est extrait d'un accumulateur de gaz d'allumage associé à chaque fois à un cylindre via une soupape d'allumage pouvant être commandée, laquelle est reliée d'une part à une alimentation de gaz combustible et d'autre part à la chambre de cylindre, l'accumulateur de gaz d'allumage étant alimenté par les gaz de travail sortant de la chambre de cylindre à la pression maximale de la chambre de combustion via un dispositif à soupapes.

3. Procédé selon la revendication 1 ou 2, **caractérisé en ce qu'**un accumulateur de pression supplémentaire, qui est d'une part alimenté à la pression maximale de la chambre de combustion à partir de la chambre de cylindre associée à l'accumulateur de gaz d'allumage et dont le contenu en gaz peut d'autre part alimenter en pression l'accumulateur de gaz d'allumage, est associé à l'accumulateur de gaz d'allumage.

4. Procédé selon l'une quelconque des revendications 1 à 3, **caractérisé en ce que** la surface. chaude est formée par un corps incandescent disposé dans une zone d'injection et pouvant être relié à une source d'alimentation en énergie thermique.

5. Procédé selon l'une quelconque des revendications 1 à 4, **caractérisé en ce que** la surface du corps incandescent est pourvue au moins partiellement d'un matériau agissant comme un catalyseur pour le gaz combustible.

6. Procédé selon l'une quelconque des revendications 1 à 5, **caractérisé en ce qu'**une quantité de gaz combustible mesurée en fonction des exigences de charge est injectée dans la chambre de cylindre dans la course d'aspiration pour générer le mélange homogène air/gaz combustible.

7. Procédé selon l'une quelconque des revendications 4 à 6, **caractérisé en ce que** l'alimentation en énergie vers le corps incandescent se produit en fonction de températures prédéfinissables.
